# EUROPÄISCHE PATENTANMELDUNG

(11) **EP 1 180 467 A1**
(43) Veröffentlichungstag der Anmeldung: **20.02.2002**
(21) Anmeldenummer: 01119472.7
(22) Anmeldetag: 13.08.2001
(51) Int. Cl.: B62D 1/19, B62D 1/18

(54) **Lenksäule für ein Kraftfahrzeug**

(30) Priorität: 16.08.2000 DE 10039792
(71) Anmelder: DaimlerChrysler AG, 70567 Stuttgart (DE)
(72) Erfinder: Bohlen, Jens, 21398 Reppenstedt (DE); Born, Christian, 22605 Hamburg (DE); Schuliers, Wolfgang, 21244 Buchholz (DE)

(57) **Zusammenfassung**

Vorliegend wird eine Lenksäule für ein Kraftfahrzeug beschrieben, wobei die Lenksäule eine in einem Mantelrohr (3) drehbar gelagerte Lenkwelle (2) aufweist und das Mantelrohr an zwei sich im wesentlichen in axialer Rictung erstreckenden Schienen (4A,4B), die ihrerseits karosseriefest sind, befestigt ist. Zwischen den Schienen wird das Mantelrohr (3) bei einer Axialverschiebung im Crash-Fall geführt, wobei zumindest einer Schiene (4A,4B) wenigstens ein Deformationselement (14A,14B) zugeordnet ist, das wenigstens einseitig an der Schiene befestigt ist und bei einer Axialverschiebung des Mantelrohres unter Energieaufnahme plastisch derart deformierbar ist, daß es über an dem Mantelrohr (3) fest angeordnete Umlenkmittel (15A,15B,16A,16B) mittels Rollreibung deformiert wird.

## Beschreibung

Die vorliegende Erfindung bezieht sich auf eine Lenksäule für ein Kraftfahrzeug.

Im Fall eines Zusammenstoßes, der einer primären Kollision folgt und bei dem ein Fahrzeug beispielsweise gegen ein anderes Fahrzeug oder ein anderes Hindernis prallt, kann der Körper eines Fahrzeugführers unter Umständen ohne den Schutz beispielsweise eines Airbags auf ein Lenkrad aufprallen, da der Airbag schon nach der Primärkollision entfaltet war und zwischenzeitlich wieder in sich zusammengefallen ist.

Um den Stoß, der auf den Körper des Fahrers einwirkt, bei einer sekundären Kollision zu entlasten bzw. zu mindern und um eine wesentliche Verletzung des Fahrzeugführers durch die Lenksäule zu verhindern, sind aus dem Stand der Technik verschiedene Fahrerschutzeinrichtungen, die auch als Stoß absorbierende Lenkeinrichtungen bezeichnet werden, bekannt.

So wird in der DE 195 15 009 A1 eine Stoß absorbierende Lenkvorrichtung vorgeschlagen, bei der durch Reduzierung einer Spitzenbelastung bei einer anfänglichen Bewegung eines sekundären Aufpralles Stoßenergie, die durch die sekundäre Kollision verursacht wird, durch Verbiegen eines sich biegenden Bereichs einer Energie absorbierenden Platte absorbiert wird. Diese Energie absorbierende Platte besitzt ein hinteres Ende, das durch eine Fahrzeugkarosserie gehalten ist. In dem sich biegenden Bereich ist ein Schlitz gebildet und ein Querschnittsflächenbereich so reduziert, daß sich der biegbare Bereich leicht plastisch deformieren und damit Energie absorbieren kann.

Mit einer solchen Energieabsorptionsplatte wird eine Erhöhung der Spitzenbelastung bei der anfänglichen Bewegung des sekundären Aufpralls trotz der Härtung des sich biegenden Bereichs während des Herstellverfahrens verhindert.

Solche sogenannten Energieabsorptionsplatten, wie sie beispielsweise in dieser Druckschrift beschrieben werden, weisen jedoch den Nachteil auf, daß sie üblicherweise einen großen Bauraum erfordern. Weiterhin wird bei einer solchen Ausgestaltung die Lenksäule bei einem Unfall nicht geführt, und daher kann die Lenkvorrichtung unkontrolliert verschoben und verformt werden. Auch dies kann zu Beeinträchtigungen der Fahrzeuginsassen führen.

Aus der deutschen Offenlegungsschrift DE 196 21 183 ist eine Teleskoplenksäule, die zur Verminderung des Risikos für Personenschäden bei Unfällen für Fahrzeuge Verwendung findet, bekannt. Die in diesem Dokument beschriebene Teleskoplenksäule für Fahrzeuge mit einem Unterteil, das in einem Oberteil axial teleskopartig verschiebbar angeordnet ist, und mit einer Befestigung für das Lenksäulenoberteil zeichnet sich dadurch aus, daß die Befestigung mindestens ein Bauteil enthält, das sich bei einer axialen teleskopartigen Bewegung des Lenksäulenoberteils und der Energieaufnahme fortschreitend deformieren kann.

Bei einer derartigen Teleskoplenksäule müssen jedoch die Maßnahmen für eine Energieabsorption beim Zusammenschieben der Lenksäule bei einer Kollision durch einen relativ hohen zusätzlichen baulichen Aufwand bereitgestellt werden.

Der US 5,961,146 ist eine weitere Energie absorbierende Lenksäule zu entnehmen. Dabei weist die dafür vorgesehene Vorrichtung einen ersten Träger auf, der an der Lenksäule in einem mittleren Bereich fixiert ist und einen zweiten Träger, der an der Karosserie befestigt ist, um den ersten Träger zu stützen.

Weiterhin ist eine Verbindungsvorrichtung, die ein Energieabsorptionsmittel zum Unterstützen des ersten Trägers bis zu einer vorbestimmten Kraft aufweist, vorgesehen. Dadurch kann eine Kollisionskraft, die auf die Lenksäule aufgebracht wird, absorbiert werden und es wird dem ersten Träger erlaubt, sich relativ zum zweiten Träger zu bewegen, um die Aufschlagenergie zu absorbieren, wenn eine bestimmte Last auf die Lenksäule aufgebracht wird.

Das Energie absorbierende Mittel enthält einen Metalldraht, der einen Grundabschnitt aufweist und verlängerte verformbare Abschnitte, die sich entsprechend von den Enden des Grundabschnittes zu den freien Enden verbreitern. Jeder der deformierbaren Abschnitte hat zurückgefaltete Abschnitte und verformbare Abschnitte, die sich von den zurückgefalteten Abschnitten zu Endabschnitten hin ausbreiten. Das Energie absorbierende Mittel wird bei einem Basisabschnitt des ersten oder zweiten Trägers aufgenommen und ist mit dem anderen Träger in seinem zurückgefalteten Abschnitt in Verbindung oder verbindbar. Wenn die bei einer sekundären Kollision aufgebrachte Kraft einen vorbestimmten Wert überschreitet und sich der erste Träger relativ zum zweiten Träger vorwärts bewegt, wird der Metalldraht von dem ersten Träger an die zurückgefalteten Abschnitte gegen den Bolzen gedrückt, um die zurückgefalteten Abschnitte entlang der deformierbaren Abschnitte in Richtung zu den freien Abschnitten zu drücken und dabei sekundäre Kollisionsenergie zu absorbieren.

Darüber hinaus ist aus der deutschen Offenlegungsschrift DE 198 19 713 eine Lenksäule für ein Kraftfahrzeug mit einer in einem Mantelrohr drehbar gelagerten Lenksäule bekannt, wobei dem Mantelrohr wenigstens ein Deformationselement zugeordnet ist, das bei Axialverschiebung des Mantelrohres unter Energieaufnahme plastisch deformierbar ist. Dabei ist das wenigstens eine Deformationselement zumindest einseitig am Mantelrohr festgelegt und es liegt an karosseriefest angeordneten Umlenkmitteln an, die derart axial zu dem Deformationselement positioniert sind, daß das Deformationselement bei einer Axialverschiebung des Mantelrohres mit Hilfe der Umlenkmittel deformiert wird.

Bei diesen beiden vorstehend beschriebenen Lenksäulen hat es sich jedoch ebenso als Nachteil erwiesen, daß die Anordnungen zur Energieabsorption eine baulich sehr aufwendige Gestaltung erfordert.

Eine weitere Energie absorbierende Lenksäule für Kraftfahrzeuge wird in der deutschen Offenlegungsschrift DE 197 10 725 offenbart. Bei dieser dort beschriebenen Lenksäule ist ein Energieabsorber mit einem Joch, das um eine Quermittellinie einer Kraftfahrzeugkarosserie herum schwenkbar ist, und einem Energieabsorptionsmittel zwischen dem Joch und dem Säulenmantel, das auf eine geradlinigen Bewegung des Säulenmantels relativ zum Joch anspricht, vorgesehen. Der Säulenmantel erstreckt sich durch eine Bohrung in dem Joch, und eine Kunststoffbuchse in der Bohrung verhindert, daß der Säulenmantel relativ zu dem Joch vor und während einer geradlinigen Bewegung des Säulenmantels kippt. Das Energieabsorptionsmittel umfaßt ein flaches Metallband, das an einem Ende des Säulenmantels angebracht und über einen konvexen Amboss an dem Joch gebogen ist. Das Metallband wird über den Amboss parallel zu einer Längsmittellinie des Säulenmantels gezogen und plastisch verformt, um einen Bruchteil der kinetischen Energie eines Stoßes auf die Lenksäule in Arbeit umzuwandeln.

Diese Energie absorbierende Lenksäule hat sich, wie auch die anderen vorstehend beschriebenen, aufgrund ihrer sehr aufwendigen baulichen Gestaltung jedoch als wenig vorteilhaft erwiesen.

Ausgehend hiervon ist es Aufgabe der vorliegenden Erfindung, eine Lenksäule für ein Kraftfahrzeug bereitzustellen, mittels der durch eine nur geringe zusätzliche bauliche Gestaltung eine gute Energieabsorption bei einem Unfall insbesondere einer sekundären Kollision, gewährleistet ist.

Diese Aufgabe wird bei einer Lenksäule der eingangs genannten Art gemäß den Merkmalen des Patentanspruches 1 gelöst.

Durch die erfindungsgemäße Ausgestaltung der Lenksäule aus einer Lenkwelle und einem Mantelrohr, das an zwei Schienen karosseriefest befestigt ist und bei einer Axialverschiebung zwischen diesen Schienen geführt werden kann, wobei zumindest einer Schiene ein Deformationselement zugeordnet ist, das bei einer Axialverschiebung des Mantelrohrs im Crash-Fall unter Energieaufnahme plastisch deformierbar ist, kann zum einen der Bauraum für die Lenksäule sehr gering, und zwar insbesondere sehr flach, gehalten werden und darüber hinaus bei einer Axialverschiebung eine ausreichende Energieaufnahme durch Rollreibung gewährleistet werden. Indem das Mantelrohr in einem Crash-Fall durch die sich im wesentlichen in axialer Richtung erstreckenden Schienen geführt ist, wird das Mantelrohr geführt nach vorne bewegt und nicht willkürlich in den Motorraum hinein bewegt und verformt.

Um nicht nur eine Energieabsorption durch das Verformen des Deformationselementes zu erreichen, sondern ebenfalls durch das Lösen des Mantelrohrs von den Schienen zu einer Bewegung in Vorwärtsfahrtrichtung zu gelangen, wird das Mantelrohr an den Schienen bevorzugt über Kunststoffscherstifte befestigt, die ab einer bestimmten axialen Kraft gelöst werden können und damit auch Energie absorbieren können.

Dadurch, daß derartige Schienen häufig auch mit Schlitzen versehen sind, die sich ebenfalls in axialer Richtung erstrecken und üblicherweise zur Längenverstellung der Lenksäule dienen, kann eine teleskopierbare Lenksäule mit Deformationselementen ohne zusätzlichen Bauraumbedarf bereitgestellt werden.

Gemäß einer Ausführungsform ist das Deformationselement als ein Blechstreifen ausgeführt. Dieser Blechstreifen wird um Umlenkmittel, wie beispielsweise Bolzen und/oder Gehäusekanten geführt. Die Radien bzw. die Abstände der Umlenkmittel zueinander können variabel sein und gezielt eingestellt werden. Dadurch kann der Umformgrad des Blechstreifens variiert und somit das Niveau der zu absorbierenden Energie eingestellt werden. Das bringt den Vorteil mit sich, dass mit ein und derselben Vorrichtung unterschiedlichste Anforderungen, wie beispielsweise unterschiedliche länderspezifische Anforderungen, erfüllt werden können. Es ist aber auch denkbar, die Anpassung abhängig von den jeweiligen Crashbedingungen auszuführen und die Einstellung erst kurz vor einem Aufprall vorzunehmen.

Weitere Vorteile und vorteilhafte Ausgestaltungen der Erfindung ergeben sich aus den Patentansprüchen und den nachfolgend anhand der Zeichnung prinzipmäßig beschriebenen Ausführungsbeispielen.

Es zeigt dabei:
- Fig. 1: einen Querschnitt durch eine Lenksäule gemäß einer ersten bevorzugten Ausführungsform der Erfindung;
- Fig. 2: einen Querschnitt durch eine Lenksäule gemäß einer zweiten bevorzugten Ausführungsform der Erfindung;
- Fig. 3: einen Längsschnitt durch eine erfindungsgemäße Lenksäule in einem Zustand vor einem Unfall;
- Fig. 4: einen Längsschnitt durch die Lenksäule der Fig. 3 in einem Zustand nach einem Unfall;
- Fig. 5: ein Deformationselement gemäß einer bevorzugten Ausführungsform der Erfindung in drei verschiedenen Ansichten; und
- Fig. 6: ein Deformationselement mit zwei verschiedenen Ausführungsformen von Umlenkmitteln.

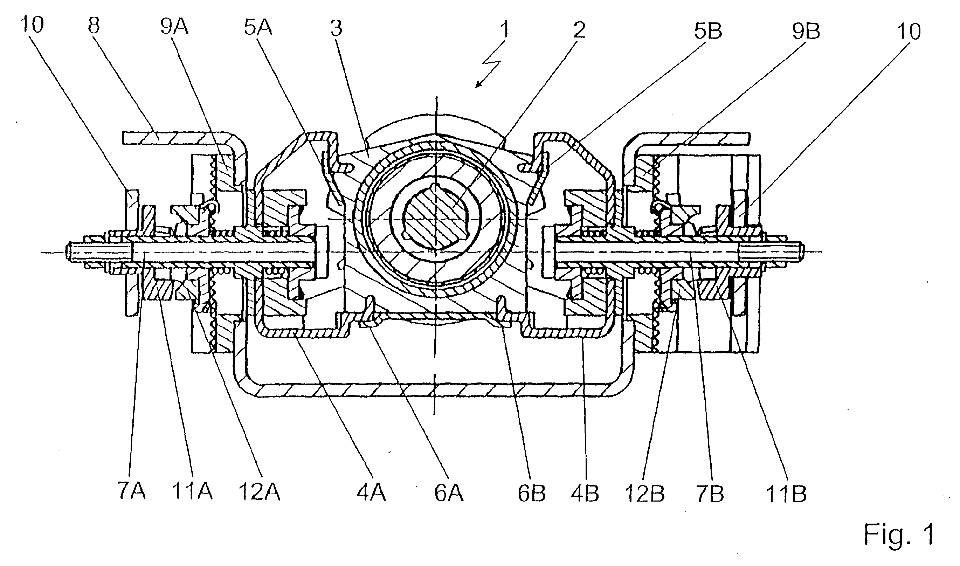

Die Fig. 1 zeigt eine Lenksäule 1 für ein Kraftfahrzeug in einer in ihrer Querrichtung geschnittenen Ansicht. Die Lenksäule 1 ist dabei derart aufgebaut, daß eine Lenkwelle 2 in einem Mantelrohr 3 drehbar gelagert ist und das Mantelrohr 3 an zwei sich im wesentlichen in axialer Richtung erstreckenden Schienen 4A, 4B befestigt ist, zwischen denen das Mantelrohr 3 bei einer Axialverschiebung der Lenksäule 1 in einem Crash-Fall geführt werden kann.

Die Befestigung des Mantelrohres 3 an den Schienen 4A, 4B erfolgt dabei über Kunststoffscherstifte 5A, 5B, 6A, 6B. Bei der in der Fig. 1 gezeigten bevorzugten Ausführungsform der Lenksäule 1 handelt es sich um eine teleskopierbare Lenksäule 1, wobei eine Längenverschiebung derart erreicht wird, daß in den Schienen 4A, 4B sich im wesentlichen axial erstreckende Schlitze bereitgestellt sind, in denen eine Führung des Mantelrohres 3 bei einer Längenverstellung erfolgt.

Für eine Längenverstellung der Lenksäule 1 ist jeweils durch die Schlitze der Schienen 4A, 4B ein Klemmbolzen 7A, 7B geführt, der sich im wesentlichen in einer radialen Richtung weg vom Mantelrohr 3 erstreckt. Die Klemmbolzen 7A, 7B durchlaufen weiterhin einen Halter 8, der zum Befestigen an der Karosserie des Fahrzeuges dient.

Am Halter 8 sind jeweils Schienen 9A, 9B zur Höhenverstellung angelenkt. Das Feststellen und Lösen der Längen- und Höhenverstellung erfolgt dabei mittels eines Hebels 10, der in der in Fig. 1 dargestellten Querschnittansicht jedoch nur an seiner Anlenkung an den beiden Klemmbolzen 7A, 7B gezeigt ist. Dieser Hebel 10 ist dabei jeweils auf einer Kurvenscheibe 11A, 11B angeordnet, die wiederum jeweils mit einer weiteren Kurvenscheibe 12A bzw. 12B in Verbindung steht. Wird nun der Hebel 10 betätigt, werden die Kurvenscheiben 11A und 12A bzw. 11B und 12B derart zueinander verstellt, daß entweder ein Spiel freigegeben wird, und dadurch eine Längenverstellung der Lenksäule 1 entlang der Schienen 4A und 4B oder eine Höhenverstellung über die Schienen 9A, 9B möglich ist, oder aber die Kurvenscheiben 11A, 12A bzw. 11B, 12B zueinander festgestellt bzw. verklemmt werden.

Als "Kurvenscheibe" wird dabei jeweils eine Scheibe mit einem Profil verstanden, das in einer ersten Stellung der Scheibe ein Spiel zwischen angrenzenden Bauelementen läßt und in einer zweiten Stellung z.B. durch eine Erhebung eine Klemmwirkung erzeugt.

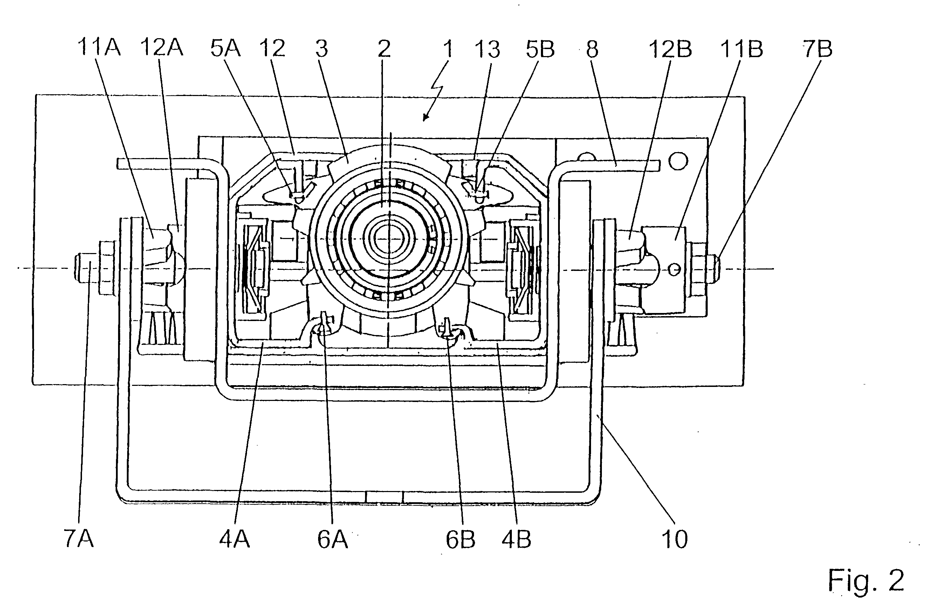

In Fig. 2 ist eine weitere Ausführungsform der Erfindung gezeigt, wobei ebenfalls entsprechend der Fig. 1 ein Querschnitt durch die Lenksäule 1 gezeigt ist. Der Schnitt ist jedoch hier in Vorwärtsfahrtrichtung gesehen weiter vorne als bei Fig. 1 durchgeführt, weshalb der der Fig. 1 entsprechende Höhen- und Längenverstellmechanismus nicht mehr in einer geschnittenen Ansicht gezeigt ist und dafür der Hebel 10 besser erkennbar ist. Im übrigen wurden in der Fig. 2 der Fig. 1 entsprechende Teile mit den gleichen Bezugszeichen bezeichnet.

Wiederum wird, um einen Vorlauf des Mantelrohres 3 bei einem Unfall zu realisieren, das Mantelrohr 3 von zwei Schienen 4A, 4B aufgenommen, zwischen denen es im Crash-Fall geführt nach vorne gleiten kann. Im normalen Betrieb ist das Mantelrohr 3 über je zwei Kunststoffscherstifte 5A, 5B, 6A, 6B in den Schienen 4A, 4B fixiert. Dabei wurden gemäß der in Fig. 2 dargestellten bevorzugten Ausführungsform die Kunststoffscherstifte 5A bzw. 5B und 6A bzw. 6B bei der Montage der Schienen 4A, 4B direkt an das Mantelrohr 3 durch Bohrungen im Mantelrohr 3 und den Schienen 4A, 4B eingespritzt. Durch den Durchmesser der Bohrungen und durch die verschiedenen Modifikationen des Kunststoffes kann die Abscherkraft der Kunststoffbolzen beim Crash und damit auch die Energieabsorption gesteuert werden. Eine mögliche Grenze, bei der sich die Kunststoffscherstifte (5A, 5B, 6A, 6b) vom Mantelrohr (3) und oder den Schienen (4A, 4B) lösen, kann bei etwa 7 kg/N liegen.

Eine solche Gestaltung hat sich auch deshalb als vorteilhaft erwiesen, da der eingespritzte Kunststoff zum Fixieren des Mantelrohres 3 an den Schienen 4A, 4B zusätzlich zum Ausgleich von Fertigungstoleranzen im Mantelrohr 3 und der auch zur Führung im Crash-Fall dienenden Schienen 4A, 4B genutzt werden kann.

Die Klemmbolzen 7A, 7B des Klemmbereiches greifen durch die Schlitze der Schienen 4A, 4B, wodurch eine hintere Führung der Klemmbolzen 7A, 7B gewährleistet ist. In ihrem vorderen, dem Insassen zugewandten Bereich werden die Schienen 4A, 4B in einem Kastenprofil 13, das mit dem vorderen Halter 8 verbunden ist, geführt.

Es hat sich gezeigt, daß der Abstand der Schienen 4A, 4B zueinander so groß gewählt werden sollte, daß eine Befestigungsmechanik eines Blinkerschaltermoduls zusammen mit dem Mantelrohr 3 bei einem Crash-Vorlauf dazwischen Platz hat. Bei einer solchen Ausgestaltung begrenzt nämlich erst die Hauptebene des Blinkerschaltermoduls den Vorlaufweg, wenn sie gegen die Enden der Schienen 4A, 4B stößt. Dabei ist der Vorlaufweg unabhängig von der eingestellten Position des Mantelrohres 3 konstant.

Allgemein hat es sich in Versuchen gezeigt, daß es besonders vorteilhaft ist, wenn in einem Crash-Fall ein Vorlaufweg von ca. 100 mm zur Verfügung steht.

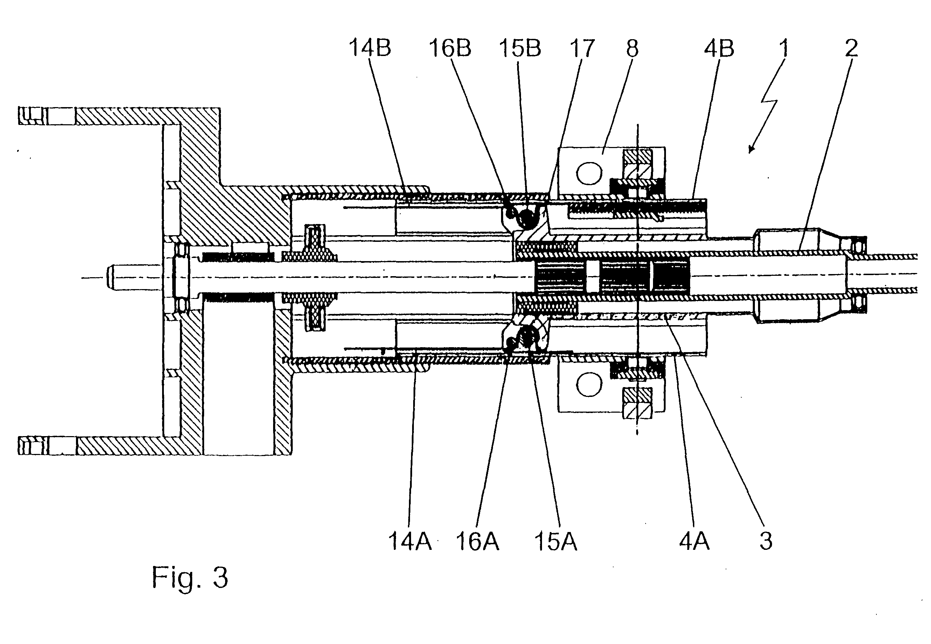

Die Fig. 3 zeigt einen Schnitt durch eine Lenksäule 1 in einer Lenkrichtung. Wiederum ist die Lenkwelle 2, die in dem Mantelrohr 3 geführt ist, erkennbar.

Jeder an dem Mantelrohr 3 befestigten Schiene 4A, 4B ist ein Deformationselement 14A, 14B zugeordnet, das bei einer Axialverschiebung des Mantelrohres 3 in einem Crash-Falle, d.h. also sobald das Mantelrohr 3 in den Schienen 4A, 4B bewegt wird, unter Energieaufnahme plastisch deformiert wird. Das Deformationselement 14A, 14B, das hierbei als ein Blechstreifen ausgebildet ist, ist jeweils an einer Schiene 4A, 4B befestigt und liegt an mit dem Mantelrohr 3 fest verbundenen Umlenkmitteln an, wobei die Umlenkmittel hier jeweils durch zwei Bolzen 15A, 16A bzw. 15B, 16B und eine Gehäusekante 17 des Mantelrohres 3 gebildet sind.

Wird nun das Mantelrohr 3 nach Lösen der Fixierung von den Schienen 4A, 4B in einem Crash-Fall relativ zu den Schienen 4A, 4B bewegt, so werden die Blechstreifen 14A, 14B unter stetiger Biegung und Rückbiegung an den Bolzen 15A, 15B, 16A, 16B und der Kante 17 vorbei geführt, wobei durch dieses Rollbiegen Energie absorbiert wird.

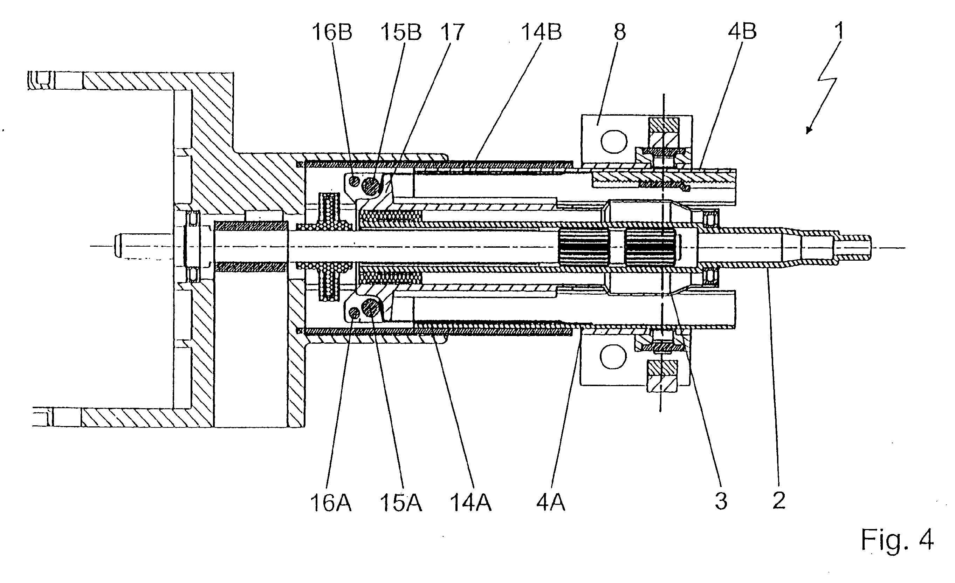

In Fig. 4 ist eine der Fig. 3 entsprechende Darstellung gezeigt, wobei sich die Fig. 3 und die Fig. 4 dadurch unterscheiden, daß in Fig. 3 eine Position der Lenksäule 1 in einem Normalzustand gezeigt ist, während Fig. 4 einen Zustand nach einer unfallbedingten Deformation zeigt. Betrachtet man die Fig. 4, so erkennt man, daß sich die Blechstreifen 14A, 14B vollständig durch die Bolzen 15A, 16A bzw. 15B, 16B und über die Gehäusekante 17 des Mantelrohres 3 gewunden haben und gleichsam abgerollt sind.

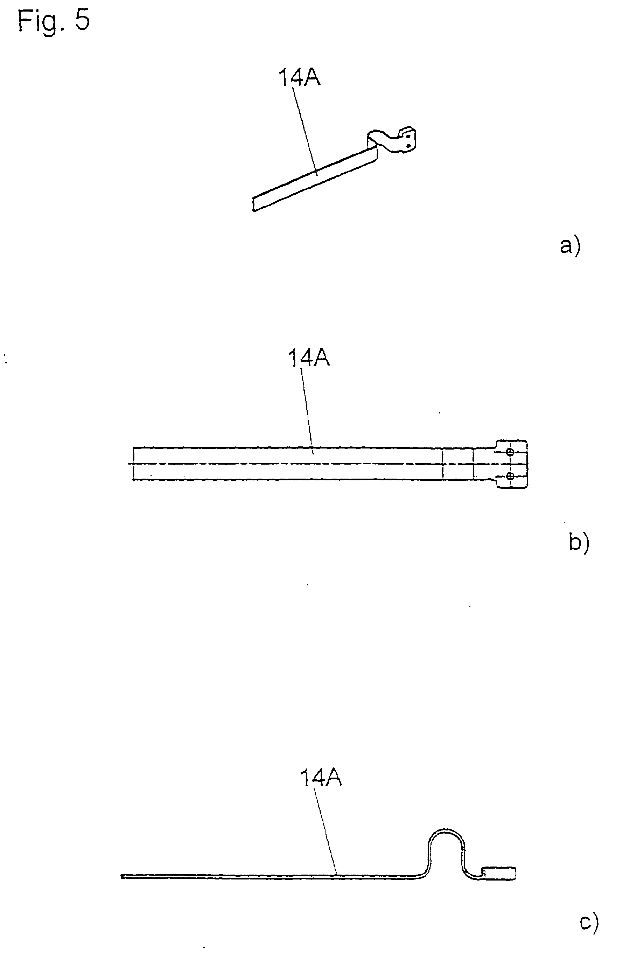

Die Fig. 5 zeigt den Blechstreifen 14A selbst in einer dreidimensionalen Ansicht a), einer Draufsicht b) und einer Seitenansicht c). Dabei zeigt die Fig. 5 den Blechstreifen 14A in seinem noch unverformten, in die Lenksäule 1 eingebauten Normalzustand. Dieser Blechstreifen 14A ist mit dem Blechstreifen 14B identisch.

Gemäß dieser Ausführungsform weist der Blechstreifen 14A über seine gesamte Länge eine einheitliche Dicke auf. Jedoch wäre es durchaus auch denkbar, daß der Blechstreifen 14A über seine Länge unterschiedlich dick ausgebildet wird. Darüber hinaus können sogar bestimmte Kraftverläufe dargestellt werden, wenn man die Streifenbreite des Blechstreifens 14A bzw. 14B über der Länge verändert.

Weiterhin läßt sich das von den Blechstreifen 14A, 14B erwünschte absorbierende Energieniveau über die Variation der Radien der Bolzen 15A und 16A bzw. 15B und 16B, der Abstände der Bolzen 15A und 16A bzw. 15B und 16B zueinander und dem Anstand zu der Gehäusekante 17 des Mantelrohres 3, die ebenfalls als Umlenkmittel dienen kann, einstellen. Ferner kann auch die Blechdicke und der Streifenbreite der Blechstreifen 14A, 14B variiert werden und so an die jeweiligen Anforderungen angepaßt werden.

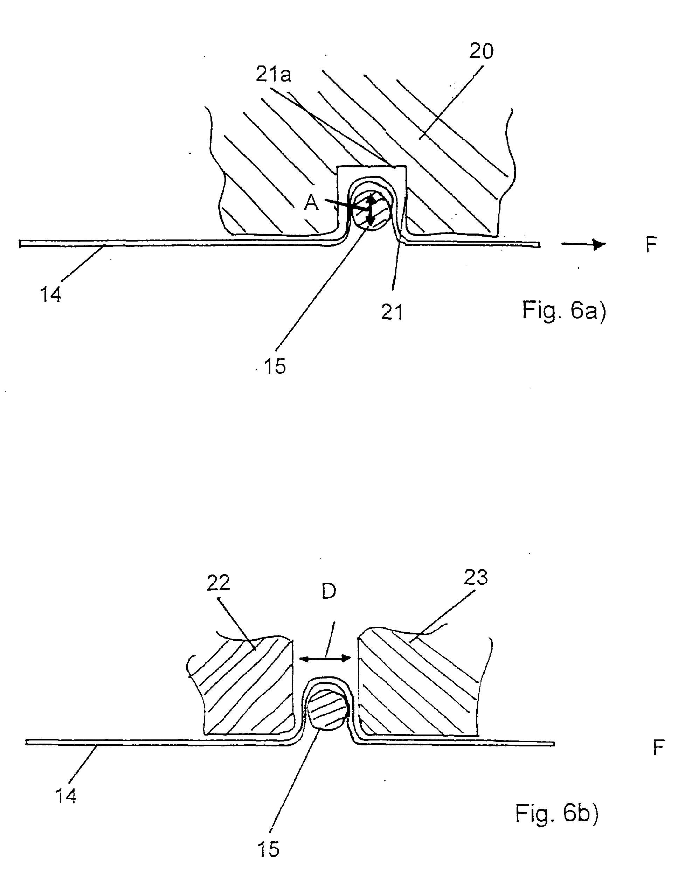

In Fig. 6 sind verschiedene Ausführungsbeispiele von Umlenkmitteln mit einem Blechstreifen 14 dargestellt, mittels denen man die Variation der Abstände der Umlenkmittel zueinander und damit eine Variation des gewünschten Energieabsrobtionsniveaus realisieren kann.

Gemäß Fig. 6a) bestehen die Umlenkmittel aus einer Backe 20, in die eine Nut 21 eingebracht ist. In der Nut 21 ist ein Bolzen 15 gelagert. Der Blechstreifen 14 ist um den Bolzen herum geführt, so dass er zwischen Bolzen 15 und den Wandungen der Nut 21 zu liegen kommt. Der Bolzen 15 ist so gelagert, dass er entsprechend dem Doppelpfeil A in der Nut verschoben werden kann. Dabei ändert sich der Abstand zwischen dem Bolzen 15 und der oberen Wandung 21a der Nut. Durch die Abstandsvariation lässt sich der Umformgrad des Blechstreifens 14 und somit auch die Kraft F, die der Crash-Kraft entspricht, stufenlos verändern.

Die Verschiebung des Bolzens lässt sich beispielsweise durch ein Spindelsystem mit einem Stellmotor oder einem Hubmagnet realisieren.

In dem in Fig. 6b) dargestellten Ausführungsbeispiel ist der Bolzen 15 zwischen zwei Backen 22, 23 angeordnet. Der Abstand D der Backen 22, 23 zueinander ist variabel. Über diese Abstandsveränderung lässt sich entsprechend der zuvor beschriebenen Variante der Umformgrad des Blechstreifens bestimmen. Auch der Verstellmechanismus der Backen 22, 23 kann entsprechend über ein Spindelsystem mit einem Stellmotor oder einen Hubmagneten erfolgen.

## Patentansprüche

1. Lenksäule (1) für ein Kraftfahrzeug mit einer in einem Mantelrohr (3) drehbar gelagerten Lenkwelle (2), bei der das Mantelrohr (3) an zwei sich im wesentlichen in axialer Richtung erstreckenden Schienen (4A, 4B) karosserieseitig befestigt ist, wobei zwischen den Schienen (4A, 4B) das Mantelrohr (3) bei einer Axialverschiebung geführt ist, und wobei zumindest einer Schiene (4A, 4B) wenigstens ein Deformationselement (14A, 14B) zugeordnet ist, das wenigstens einseitig an der Schiene (4A, 4B) befestigt ist und bei einer Axialverschiebung des Mantelrohres (3) im Crash-Fall unter Energieaufnahme plastisch derart deformierbar ist, daß es über an dem Mantelrohr (3) fest angeordnete Umlenkmittel (15A, 15B, 16A, 16B) mittels Rollreibung deformiert wird.

2. Lenksäule nach Anspruch 1,
**dadurch gekennzeichnet,**
**daß** das Mantelrohr (3) über Kunststoffscherstifte (5A, 5B, 6A, 6B) an den Schienen (4A, 4B) fixiert ist.

3. Lenksäule nach Anspruch 2,
**dadurch gekennzeichnet,**
**daß** die Kunststoffscherstifte (5A, 5B, 6A, 6B) durch Bohrungen in den Schienen (4A, 4B) und dem Mantelrohr (3) eingespritzt sind.

4. Lenksäule nach Anspruch 2 oder 3,
**dadurch gekennzeichnet,**
**daß** die Kunststoffscherstifte (5A, 5B, 6A, 6B) bei einer vorbestimmten Kraft vom Mantelrohr (3) und oder den Schienen (4A, 4B) lösbar sind.

5. Lenksäule nach einem der Ansprüche 1 bis 4,
**dadurch gekennzeichnet,**
**daß** die Schienen (4A, 4B) mit sich im wesentlichen axial erstreckenden Schlitzen zur Längenverstellung des Mantelrohres (3) ausgeführt sind.

6. Lenksäule nach einem der Ansprüche 1 bis 5,
**dadurch gekennzeichnet,**
**daß** das Deformationselement (14A, 14B) ein Blechstreifen ist.

7. Lenksäule nach einem der Ansprüche 1 bis 6,
**dadurch gekennzeichnet,**
**daß** die Umlenkmittel durch Bolzen (15A, 15B, 16A, 16B) und Gehäusekanten (17) an dem Mantelrohr (3) gebildet werden.

8. Lenksäule nach einem der Ansprüche 1 bis 7,
**dadurch gekennzeichnet,**
**daß** die Radien bzw. die Abständer der Umlenkmittel zueinander variabel und gezielt einstellbar sind.

9. Lenksäule nach Anspruch 8,
**dadurch gekennzeichnet,**
**dass** die Radien bzw. die Abständer der Umlenkmittel zueinander in Abhängigkeit von den jeweiligen Crashbedingungen eingestellt werden.

10. Lenksäule nach einem der Ansprüche 1 bis 9,
**dadurch gekennzeichnet,**
**daß** die Führung des Mantelrohres (3) zwischen den Schienen (4A, 4B) bei einem Unfall einen Vorlaufweg von wenigstens annähernd 100 mm zur Verfügung stellt.

11. Lenksäule nach einem der Ansprüche 1 bis 10,
**dadurch gekennzeichnet,**
**daß** die durch das Deformationselement (14A, 14B) absorbierbare Energie mittels Variation von Material, Materialdicke, Breite des Deformationselements (14A, 14B), Radien der Umlenkmittel (15A, 15B, 16A, 16B) und/oder Abstand der Umlenkmittel (15A, 15B, 16A, 16B) einstellbar ist.
